# EUROPÄISCHE PATENTSCHRIFT

(11) **EP 2 865 569 B1**
(45) Veröffentlichungstag und Bekanntmachung des Hinweises auf die Patenterteilung: **29.06.2016**
(21) Anmeldenummer: 14198300.7
(22) Anmeldetag: 01.02.2012
(51) Int. Cl.: B60R 1/00

(54) **Anzeigeeinrichtung für Sichtfelder eines Nutzfahrzeugs**
Display device for fields of vision of a commercial vehicle
Dispositif d'affichage pour champs de vision d'un véhicule utilitaire

(30) Priorität: 08.02.2011 DE 102011010624
(43) Veröffentlichungstag der Anmeldung: 29.04.2015
(62) Teilanmeldung aus: 12153489.5
(73) Patentinhaber: MEKRA LANG GmbH & Co. KG, 91465 Ergersheim (DE)
(72) Erfinder: Lang, Werner, 91465 Ergersheim (DE); Bauer, Stefan, 91466 Gerhardshofen (DE)
(74) Vertreter: Kramer Barske Schmidtchen Patentanwälte PartG mbB

(56) Entgegenhaltungen:
- EP-A2- 1 018 839
- GB-A- 2 351 055

## Beschreibung

Die vorliegende Erfindung betrifft eine Anzeigeeinrichtung für Sichtfelder eines Nutzfahrzeugs in einem Fahrerhaus des Nutzfahrzeugs.

Bei Kraftfahrzeugen sind abhängig von dem Typ des Kraftfahrzeugs, wie beispielsweise Krafträdern, Kraftfahrzeugen zur Personenbeförderung, Kraftfahrzeugen zur Güterbeförderung, usw., sogenannte Sichtfelder gesetzlich vorgegeben, welche durch eine Einrichtung für indirekte Sicht, herkömmlicher Weise einen Spiegel, abgebildet werden müssen und durch den auf einem Fahrersitz sitzenden Fahrer jederzeit über die Einrichtung für indirekte Sicht einsehbar sein müssen. In Abhängigkeit vom Typ des Fahrzeugs und insbesondere davon, welche Bereiche rund um das Fahrzeug vom Fahrer direkt eingesehen werden können, verlangen in Abhängigkeit vom Fahrzeugtyp unterschiedliche gesetzliche Vorschriften, dass bestimmte Sichtfelder mittels der Einrichtungen für indirekte Sicht jederzeit eingesehen werden können.

So ist für Nutzfahrzeuge, wie beispielsweise LKWs oder Lieferwagen, derzeit beispielsweise als Einrichtungen zur indirekten Sicht ein Hauptspiegel auf jeweils der Fahrerseite und der Beifahrerseite vorgesehen, mit welchem der Fahrzeugführer einen ebenen und horizontalen Teil der Fahrbahn von bestimmter Breite einsehen kann, der sich ab einer festgelegten Entfernung hinter den Augenpunkten des Fahrzeugführers bis zum Horizont erstreckt. Außerdem muss ein Streifen geringerer Breite mittels dieses Spiegels für den Fahrzeugführer einsehbar sein, welcher in kürzerer Entfernung hinter den Augenpunkten des Fahrers beginnt. Der durch den Hauptspiegel eingesehene, gesetzlich als stets einsehbar vorgeschriebene Bereich in der Nähe des Fahrzeugs wird im Folgenden entsprechend als Sichtfeld des Hauptspiegels bezeichnet.

Neben diesen Hauptspiegeln sind beidseitig des Nutzfahrzeugs Sichtfelder als einzusehen verlangt, die durch Weitwinkelspiegel abgebildet werden. Mit den Weitwinkelspiegeln sind jeweils ein Bereich hinter den Augenpunkten des Fahrers in einer bestimmten Erstreckung in Längsrichtung des Fahrzeugs eingesehen, welcher breiter als der durch den Hauptspiegel einsehbare Bereich ist, sich jedoch nur eine bestimmte Länge entlang des Fahrzeugs erstreckt.

Nutzfahrzeuge benötigen ferner gemäß den geltenden Vorschriften zum Erfüllen der geforderten Sichtfelder mindestens einen Nahbereichs- oder Anfahrspiegel, mit welchem ein im Frontbereich neben der Fahrerkabine liegender Bereich und unmittelbar an die Fahrerkabine angrenzender Bereich einsehbar ist. Schließlich ist für zumindest einige der Nutzfahrzeuge eine Abbildung eines Sichtfelds durch z.B. einen Frontspiegel verlangt, mit welchem ein Bereich unmittelbar vor dem Nutzfahrzeug, der sich in seitlicher Richtung über die beifahrerseitige Begrenzung des Nutzfahrzeugs hinaus erstreckt, durch den Fahrer einsehbar ist.

Trotz dieser vorgeschriebenen Spiegel bzw. Einrichtungen für indirekte Sicht ist es jedoch für einen Fahrzeugführer kaum möglich bzw. sehr schwierig, die unfallkritischen Bereiche rund um ein Nutzfahrzeug jederzeit vollständig und ausreichend im Auge zu behalten. Zudem ist aufgrund der Vielzahl der Spiegel die Anforderung an den Fahrzeugführer erhöht, diese Spiegel nahezu gleichzeitig im Auge zu behalten. Die Abbildung der Sichtfelder mittels Spiegel hat zudem eine Einflussnahme der Spiegel auf die Umströmung des Fahrzeugs zur Folge, wobei die Spiegel das Strömungsverhalten meist ungünstig mit der Folge eines erhöhten Kraftstoffverbrauchs beeinflussen.

Eine Anzeigeeinrichtung ist aus der WO 2011/061238 A1 bekannt (nachveröffentlichter Stand der Technik in Bezug auf die vorliegende Anmeldung). Darin wird eine Vorrichtung zur Überwachung des Umfelds von Fahrzeugen mit wenigstens einer ersten und einer zweiten Überwachungseinrichtung, welche Anzeigesignale an einer Steuereinrichtung ausgeben, beschrieben. Eine mit der Steuereinrichtung verbundene Monitoreinrichtung ist in der Lage, die Anzeigesignale von den Überwachungseinrichtungen im Split-Screeri-Verfahren in wenigstens zwei Abschnitten darzustellen. Die Steuereiririchtung ist mit einer Bewegungszustand-Signalleitung verbunden, so dass sie in Abhängigkeit von dem Bewegungszustand des Fahrzeugs die wenigstens zwei Anzeigesignale von den Überwachungseinrichtungen im Split-Screen-Verfahren auf der Monitoreinrichtung zur Anzeige bringt.

Ferner ist eine Anzeigeeinrichtung aus der DE 10 2006 020 511 A1, bekannt. Zum Übertragen von Videosignalen von mindestens einer Kamera am Heck eines Kraftfahrzeuges bzw. Kfz-Anhängers zu zumindest einer Anzeigeeinheit im Kraftfahrzeug, insbesondere Lkw, werden die von der Kamera angegebenen Videosignale digitalisiert, unter Durchführung einer Daten-Kompression in Echtzeit codiert sowie auf eine Versorgungsspannungs-Einrichtung aufgeprägt und über diese übertragen. Die über die Versorgungsspannungs-Einrichtung übertragenen kodierten Videosignale werden von der Versorgungsspannungs-Einrichtung abgenommen, in Echtzeit decodiert bzw. dekomprimiert sowie der Anzeigeeinheit zur Bildwiedergabe zugeführt.

Ferner ist in der EP 1 018 839 A2 ein Verfahren und eine Einrichtung nach dem Oberbegriff von Anspruch 1 zur Einsichtnahme des rückwärtigen Beobachtungsraumes bei Kraftfahrzeugen offenbart. Um eine bessere und lückenlosere Sicht nach hinten bereitzustellen, wird der sogenannte tote Winkelbereich in einem größeren Winkelbereich erfasst, als der geradlinig nach hinten gerichtete Bereich des gesetzlich geforderten Bereichs und die Beobachtungsräume der besagten beiden Winkelbereiche werden in einem hierzu umgekehrt proportionalen Breitenfeld nebeneinander dargestellt.

Es ist daher Aufgabe der Erfindung, eine Anzeigeeinrichtung für die gesetzlich vorgeschriebenen Sichtfelder eines Nutzfahrzeugs zu schaffen, mit der die Sichtfelder auf übersichtliche und einfache Weise für den Fahrzeugführer beobachtet werden können und die den Einfluss auf die Umströmung des Fahrzeugs minimiert.

Diese Aufgabe wird mit einer Anzeigeeinrichtung mit den Merkmalen des Anspruchs 1 gelöst. Bevorzugte Ausführungsformen sind in den abhängigen Ansprüchen angegeben.

Der Anzeigeeinrichtung liegt der Gedanke zugrunde, statt eines Spiegels als eines herkömmlichen Mittels zur indirekten Sicht auf die gesetzlich vorgeschriebenen Sichtfelder eines Nutzfahrzeugs eine Anzeigeeinrichtung vorzusehen, mit welcher auf einer Anzeigeeinheit im Fahrerhaus zumindest ein Teil der im Fahrbetrieb als permanent einsehbar vorgeschriebenen Sichtfelder dauerhaft angezeigt werden kann. Dauerhaft bedeutet hier, dass die Anzeige der Sichtfelder, für welche die Anzeigeeinrichtung verwendet wird, nicht durch andere Angaben (zeitlich) unterbrochen wird, so dass der Fahrer jederzeit bei einem Blick auf die Anzeigeeinheit das gesetzlich vorgeschriebene Sichtfeld einsehen kann. Dauerhaft bedeutet aber auch, dass die Anzeige wenigstens im Fahrbetrieb des Nutzfahrzeugs durchgängig vorhanden ist. Der Zustand, der mit dauerhaft beschrieben und davon umfasst werden soll, kann auch optional auf den Zündzustand des Fahrzeugs oder beispielsweise einen Zustand, in dem sich ein Fahrer im Fahrzeug befinden kann, z. B. abhängig von Erfassen einer sich in der Nähe des Fahrzeugs bzw. im Fahrzeug befindenden Schlüsseleinrichtung, ausgeweitet werden. Indem eine andere indirekte Anzeigeeinheit als ein Spiegel verwendet wird, ist es dabei möglich, mindestens zwei der gesetzlich vorgeschriebenen Sichtfelder auf einer gemeinsamen Darstellung anzuzeigen, so dass es in Hinblick auf ergonomische Gesichtspunkte, dem Fahrer erleichtert wird, einen Überblick über das Geschehen in den angezeigten Sichtfelder zu behalten, da er statt auf mehrere Anzeigeeinheiten, nämlich Spiegel, auf eine einzige Anzeigeeinheit zurückgreifen kann, auf der zumindest zwei Sichtfelder in einer gemeinsamen Darstellung anzeigt werden.

Unter einer Anzeigeeinheit ist beispielsweise, aber nicht ausschließlich, ein Bildschirm bzw. Display zu verstehen. Alternative Anzeigeeinheiten sind aber auch Projektionen auf innenseitige Fahrzeugkarosserieteile oder ähnliches.

Da bei Nutzfahrzeugen, anders als bei Personenkraftwagen, der Fahrer einen Überblick über mehrere nicht direkt einsehbare Sichtfelder gleichzeitig behalten muss, da die direkte Sicht im Vergleich zu einem Personenfahrzeug wesentlich eingeschränkt ist, ist die Darstellung mehrerer Sichtfelder auf einer gemeinsamen Anzeigeeinheit in einer gemeinsamen Darstellung für Nutzfahrzeuge besonders hilfreich, da größere Bereiche der Umgebung des Nutzfahrzeugs in einer einzigen Anzeige, ggf. an einem einzigen Ort in der Fahrerkabine, dargestellt werden. Gleichzeitig wird dadurch, dass ein oder mehrere Spiegel, die außen am Fahrzeug angebracht sind, entfallen können, die direkte Sicht für den Fahrer verbessert, da die Spiegel diese nicht behindern, und die Umströmung des Fahrzeugs wird weniger beeinflusst, was sich positiv auf den Kraftstoffverbrauch auswirken kann.

Ferner bietet die Anzeigeeinrichtung den Vorteil, dass Zusatzinformation gleichzeitig in die Darstellung der dauerhaft angezeigten Sichtfelder eingeblendet werden kann. Solche Zusatzinformation kann beispielsweise bei einer gemeinsamen Darstellung des Sichtfelds eines Hauptspiegels und eines Weitwinkelspiegels auf der gleichen Seite des Nutzfahrzeugs die hintere Trailerkante sein, so dass der Fahrzeugführer neben dem Einblick in das dargestellte gesetzlich vorgeschriebene Sichtfeld gleichzeitig Information über seine Fahrzeugposition in der Darstellung dieser entnehmen kann.

Die Anzeigeeinrichtung für gesetzlich vorgeschriebene Sichtfelder eines Nutzfahrzeugs kann für alle der gesetzlich vorgeschriebenen Sichtfelder eines Nutzfahrzeugs eingesetzt werden oder aber für einen ausgewählten Teil davon. Insbesondere ist es beispielsweise möglich, den der Fahrerseite abgewandten Haupt- und Weitwinkelspiegel des Nutzfahrzeugs durch die Anzeigeeinrichtung zu ersetzen, während andere Spiegel, beispielsweise der fahrerseitige Hauptund Weitwinkelspiegel, beibehalten werden. Alternativ können auch mehrere oder alle der bislang als Spiegel ausgeführten Einrichtungen für indirekte Sicht durch die Anzeigeeinrichtung ersetzt werden.

Besonders bevorzugt ist es, wenn die gemeinsame Darstellung die Sichtfelder eines Hauptspiegels und eines Weitwinkelspiegels der gleichen Seite des Nutzfahrzeugs beinhaltet, oder jede andere Kombination von benachbarten Sichtfeldern, die nach einer weiter bevorzugten Ausführungsform aneinander angrenzend und ineinander übergehend bzw. überlappend dargestellt werden. Dies bedeutet, dass durch eine einzige Darstellung eine kontinuierliche Abbildung des Umfelds des Nutzfahrzeugs auf beispielsweise der dem Fahrer abgewandten Seite möglich ist, was im Hinblick auf die Einsicht in die gesetzlich vorgeschriebenen Sichtfelder besonders vorteilhaft ist und somit insgesamt die Sicherheit im Straßenverkehr verbessert. Alternativ können die Sichtfelder im Split-Screen Verfahren dargestellt werden, was bedeutet, dass der Fahrer auf der gemeinsamen Anzeigeeinheit zwei oder mehrere unterschiedliche Anzeigen, beispielsweise je Sichtfeld eine, zur Verfügung hat.

Die Sichtfelder eines Hauptspiegels und eines Weitwinkelspiegels der gleichen Fahrzeugseite können dabei entweder mittels einer gemeinsamen oder mehreren verschiedenen Aufnahmeeinheiten aufgenommen werden. Wird eine gemeinsame Aufnahmeeinheit vorgesehen, so können besonders bevorzugt ein hochauflösender Sensor und ein panamorphes Objektiv, das heißt ein Objektiv, das verschiedene Auflösungen für unterschiedliche Bildbereiche realisieren kann, verwendet werden.

Weiter bevorzugt enthält die Darstellung auf der Anzeigeeinheit der Anzeigeeinrichtung sowohl die Sichtfelder eines linken Hauptspiegels und/oder eines linken Weitwinkelspiegels als auch die Sichtfelder eines rechten Hauptspiegels und/oder eines rechten Weitwinkelspiegels. Dabei ist es besonders bevorzugt, auf der Anzeigeeinheit das Sichtfeld des linken Hauptspiegels und/oder des linken Weitwinkelspiegels links darzustellen und das Sichtfeld des rechten Hauptspiegels und/oder des rechten Weitwinkelspiegels rechts auf der Anzeigeeinheit darzustellen. Dies erleichtert dem Fahrer die Orientierung auf der Anzeigeeinheit, da es der Ausrichtung der Gegebenheiten rund um das Fahrzeug bei Vorwärtsblick des Fahrers entspricht. Die Ausrichtung in oben-unten Richtung der Sichtfelder eines Haupt- oder Weitwinkelspiegels ist dabei vorzugsweise so, dass bezüglich des Fahrzeugs weiter vorne liegende Bereiche in der Darstellung weiter oben liegen und bezüglich des Fahrzeugs weiter hinten liegende Bereiche in der Darstellung weiter unten liegen.

Die Richtungen vorne, hinten, links und rechts, wie sie in dieser Spezifikation benutzt werden, beziehen sich jeweils auf die Vorwärtsfahrtrichtung des Nutzfahrzeugs.

Alternativ oder darüber hinaus kann die Anzeigeeinrichtung angepasst sein, das Sichtfeld eines Nahbereichspiegels und/oder eines Frontspiegels in der gemeinsamen Darstellung zu zeigen. Ähnlich wie bei der gemeinsamen Darstellung der Sichtfelder eines Hauptspiegels und eines Weitwinkelspiegels kann, insbesondere wenn die Information dieser Spiegel aneinander angrenzend bzw. überlappend auf der Anzeigeeinheit dargestellt wird, dem Fahrzeugführer die Orientierung auf der Anzeigeeinheit und somit die Entnahme der Information über die Verkehrssituation innerhalb des Bereichs der Sichtfelder erleichtert werden.

Wenn das Sichtfeld eines Nahbereichspiegels und/oder eines Frontspiegels zusätzlich zu dem Sichtfeld von einem oder mehreren Hauptspiegeln und/oder Weitwinkelspiegeln dargestellt wird, so ist es bevorzugt, das Sichtfeld des Nahbereichspiegels und/oder des Frontspiegels bezüglich der Links-Rechts-Richtung mittig auf der Anzeigeeinheit darzustellen und die Sichtfelder des Haupt- bzw. Weitwinkelspiegels links bzw. rechts davon anzuordnen. Weiter bevorzugt ist dabei das Sichtfeld des Nahbereichspiegels und/oder des Frontspiegels in der Anzeigeeinheit weiter oben dargestellt als die Sichtfelder des Haupt- bzw. Weitwinkelspiegels. Eine solche Anordnung ermöglicht es, dem Fahrer die Orientierung auf der Anzeigeeinheit zu erleichtern, da die Anordnung der natürlichen Position der eingesehenen Bereiche rund um das Nutzfahrzeug entspricht. Insbesondere ist es also vorteilhaft, die dargestellten Sichtfelder auf der Anzeigeeinheit dort anzuordnen, wie wo sie ihren Positionen rund um das Nutzfahrzeug entsprechen, d.h. Bildinhalte eines Frontbereichs oben, Bildinhalte eines Seitenbereichs auf der jeweiligen Seite und, wenn zusätzliche Daten aus dem Heckbereich dargestellt werden, diese unten darzustellen.

Vorzugsweise ist die Anzeigeeinrichtung angepasst, die Sichtfelder in Vogelperspektive anzuzeigen. Dadurch werden Verzerrungen des dargestellten Sichtfelds weitgehend vermieden und die Darstellung entspricht wiederum dem, was der Fahrer bei einer entsprechenden natürlichen direkten Sicht aus dem Fahrerhaus, wenn sie denn möglich wäre, sehen könnte. Da das Fahrerhaus bezüglich der Straßenoberfläche deutlich erhaben ist, ist somit die Vogelperspektive sinnvoll.

Die Anzeige in Vogelperspektive kann beispielsweise dadurch erreicht werden, dass durch eine Aufnahmeeinheit aufgenommene Bilder, beispielsweise durch eine Kamera oder einen anderen Bildsensor aufgenommene Bilder, entsprechend umgerechnet und dargestellt werden.

Werden die Sichtfelder dauerhaft an gleicher Position und mit gleicher Größe auf der Anzeigeeinheit dargestellt, erleichtert dies dem Fahrer zu erfassen, welche Bereiche er auf der Anzeigeeinheit einsieht. Dies bedeutet, dass unabhängig von der Fahrsituation oder anderen äußeren Einflüssen die Sichtfelder stets an der gleichen Position im Bildschirm und mit der gleichen Größe dargestellt werden.

Alternativ ist es möglich, die Sichtfelder in Abhängigkeit von beispielsweise der Fahrsituation z.B. hinsichtlich ihrer Größe oder Position veränderlich darzustellen. Dabei muss jedoch gewährleistet sein, dass die gesetzlich vorgeschriebenen Sichtfelder jederzeit dargestellt sind und einsehbar sind. Beispielsweise ist es möglich, in Abhängigkeit von der Fahrtgeschwindigkeit die Darstellung der Sichtfelder anzupassen, so dass bei einer langsamen Fahrt (z.B. 30 km/h) die Darstellung der Information aus dem Frontbereich des Fahrzeugs vergrößert ist und die Darstellung von Information aus dem Heckbereich kleiner ist, bei schnellerer Fahrt, d.h. z.B. > 50 km/h, die Darstellung des Frontbereichs hingegen verkleinert ist und die Darstellung nach hinten vergrößert ist. Bei Rückwärtsfahrt könnte schließlich der Schwerpunkt auf der Darstellung der Information um die Beifahrerseite liegen.

Besonders bevorzugt ist eine dynamische, d.h. sich verändernde Darstellung der Inhalte auf der Anzeigeeinheit dann, wenn die Anzeigeeinrichtung angepasst ist, zusätzliche Sichtbereiche auf der Anzeigeeinheit darzustellen. Als Sichtbereiche werden Bereiche bezeichnet, die außerhalb der gesetzlich vorgeschriebenen Sichtfelder liegen. Solche Sichtbereiche können beispielsweise Information aus dem Frontbereich des Nutzfahrzeugs außerhalb der gesetzlich vorgeschriebenen Sichtfelder und/oder dem Heckbereich des Nutzfahrzeugs enthalten, die beispielsweise durch zusätzliche Rückfahrkameras erfasst werden. In diesem Fall ist es bei einer dynamischen Darstellung der Bildinhalte besonders nützlich, bei langsamer Fahrt eine nach vorne erweiterte Sicht auf der Anzeigeeinheit darzustellen, d.h. einen zusätzlichen Sichtbereich mit Information aus dem Frontbereich des Nutzfahrzeugs darzustellen, bezüglich des Heckbereichs jedoch bei langsamer Fahrt auf Information bis zum Horizont zu verzichten. Bei schnellerer Fahrt hingegen könnte gleichzeitig zu den gesetzlich vorgeschriebenen Sichtfeldern Zusatzinformation aus Sichtbereichen aus dem Heckbereich des Nutzfahrzeugs dargestellt werden, beispielsweise eine Kombination aus durch Rückfahrkameras bzw. Aufnahmeeinheiten im Heckbereich erfasster Information und Information aus den Sichtfeldern der Haupt- und Weitwinkelspiegel.

Dabei wird bevorzugter Weise die Information derart auf der Anzeigeeinheit dargestellt, dass die Information aus den Sichtbereichen im Bereich hinter dem Fahrzeug mit Sichtfeldern aus dem Haupt- und Weitwinkelspiegel zumindest teilweise überlappend bzw. ineinander übergehend ist, so dass bei schneller Vorwärtsfahrt, beispielsweise bei einem Überholvorgang, ein Fahrzeug, das sich zwar noch nicht im gesetzlich vorgeschriebenen Sichtfeld befindet, aber im zusätzlich dargestellten Sichtbereich ist, bereits in der Anzeige für das seitliche Fahrzeugumfeld erkennbar ist. Dies erhöht zusätzlich die Sicherheit.

Bei Rückwärtsfahrt könnte schließlich Bildinformation aus den Sichtbereichen des Heckbereichs groß dargestellt werden, sowie die gesamte Beifahrerseite, d.h. die Sichtfelder des Haupt- und Weitwinkelspiegels auf der Beifahrerseite, abgebildet werden. Beide Darstellungen könnten jeweils bis zum Horizont reichen, so dass der Fahrer bei Rückwärtsfahrt ebenfalls gute Orientierung hat. Dazu ist vorzugsweise eine Rückfahrkamera zum Erfassen der Information aus dem Heckbereich des Nutzfahrzeugs vorgesehen.

Ferner ist es möglich, die zusätzlichen Sichtbereiche, die zusätzlich zu den gesetzlich vorgeschriebenen Sichtfeldern dargestellt werden, nur nach Bedarf und/oder veränderlich hinsichtlich ihrer Position auf der Anzeigeeinheit darzustellen. Beispielsweise kann die Zusatzinformation im Hinblick auf den Heckbereich des Nutzfahrzeugs bei langsamer bzw. schneller Vorwärtsfahrt mittig in der Anzeigeeinheit dargestellt werden, und in einem verhältnismäßig kleinen Maßstab, während bei Rückwärtsfahrt die Information aus dem Heckbereich nicht nur einen mittigen Bereich einnimmt, sondern aufgrund einer vergrößerten Darstellung auch in Seitenbereiche der Darstellung ragt.

Information aus dem Heckbereich wird vorzugsweise so dargestellt, dass dem Fahrzeug nähere Bereiche weiter unten in der Darstellung liegen und dem Fahrzeug fernere Bereiche weiter oben in der Darstellung sind, d.h. so wie es ein aus einem Heckfenster blickender Fahrer wahrnehmen würde.

Sowohl bei der Darstellung der Sichtfelder als auch der Darstellung der Sichtbereiche ist es möglich, Zusatzinformation in die Darstellung zu überlagern. Vorzugsweise betrifft dies Positionsinformation, welche Information ist, die das Fahrzeug als Bezugssystem hat. Beispielsweise kann der Abstand zum Fahrzeug in einer bestimmten Richtung, z.B. die Entfernung zur Trailerkante nach hinten, in das entsprechende Bild eingeblendet werden. Eine andere Möglichkeit ist es, die hintere Trailerkante des Nutzfahrzeugs abzubilden. Die Darstellung der hinteren Trailerkante des Nutzfahrzeugs erhöht insbesondere bei Überholvorgängen die Verkehrssicherheit deutlich, da dann der Fahrer jederzeit einsehen und erkennen kann, wann er nach dem Überholvorgang wieder einscheren kann, weil das überholte Fahrzeug klar als sich vor bzw. hinter der Trailerkante befindend erkennbar ist. Insbesondere im Hinblick auf eine solche sogenannte Overlay Funktion ist anzumerken. Dass dies auch eine Option für den Fall ist, dass mittels der Anzeigeeinrichtung nur jeweils ein Sichtfeld in einer jeweiligen Darstellung angezeigt wird. Beispielsweise für eine ausschließliche Darstellung des Sichtfelds eines Hauptspiegels oder für eine ausschließliche Darstellung des Sichtfelds eines Weitwinkelspiegels ist die Einblendung solcher Zusatzinformationen auf der Anzeigeeinheit ebenfalls möglich.

Grundsätzlich ist es denkbar, die Anzeigeeinrichtung derart zu gestalten, dass sie eine einzige Anzeigeeinheit aufweist, unabhängig von der Anzahl der dargestellten Sichtfelder. Beispielsweise könnte mittels einer einzigen Anzeigeeinheit, beispielsweise einem Bildschirm, der z.B. auf einer Instrumententafel in der Fahrerkabine angeordnet ist, die Information aller ersetzten Spiegel angezeigt werden, beispielsweise also der Haupt- und Weitwinkelspiegel sowohl der Fahr- als auch der Beifahrerseite, sowie der Front- und Nahbereichsspiegel. Auch Zusatzinformation oder Information aus zusätzlichen Sichtbereichen könnte in diese einzige Darstellung eingeblendet werden.

Alternativ ist es möglich, mehrere voneinander getrennte Anzeigeeinheiten vorzusehen, die dann nach Bedarf an unterschiedlichen Positionen im Fahrzeug angeordnet werden können. Werden beispielsweise die beiderseitigen Haupt- und Weitwinkelspiel ersetzt, so könnte jeweils eine separate Anzeigeeinheit für das Sichtfeld des linken Hauptspiegels und das Sichtfeld des linken Weitwinkelspiegels bzw. für das Sichtfeld des rechten Weitwinkelspiegels und das Sichtfeld des rechten Hauptspiegels vorgesehen sein. Diese Anzeigeeinheiten könnten z.B. an geeigneten Orten links bzw. rechts in dem Fahrerhaus, beispielsweise nahe bei der Position herkömmlicher Spiegel, angeordnet werden. Alternativ können solche getrennten Anzeigeeinheiten an einem zentralen Ort in der Fahrerkabine angeordnet werden. In diesem Fall ist es dann bevorzugt, die Anordnung entsprechend der dargestellten Position der Fahrzeugumgebung vorzunehmen, also beispielsweise linke Seitenbereiche links darzustellen und rechte Seitenbereiche des Fahrzeugs rechts darzustellen.

Zur Aufnahme der Information der darzustellenden Sichtfelder ist mindestens eine Aufnahmeeinheit, vorzugsweise mehrere Aufnahmeeinheiten, wie beispielsweise Kameras, Bildsensoren oder andere Bilderfassungsmittel, vorgesehen. Dabei ist die Anzahl der Aufnahmeeinheiten vorzugsweise größer als die Anzahl der Anzeigeeinheiten, was den Vorteil bietet, beispielsweise Information für das jeweilige zu erfassende Sichtfeld von wenigstens zwei Aufnahmeeinheiten redundant erfassen zu lassen, so dass bei Ausfall einer der Aufnahmeeinheiten die dauerhafte Anzeige des gesetzlich vorgeschriebenen Sichtfelds gewährleistet bleibt. Zusätzlich kann durch Verfügbarkeit mehrerer Aufnahmeeinheiten für bestimmte darzustellende Bereiche die erforderliche Dynamik bei der Anzeige der Sichtfelder leichter gewährleistet werden.

Außerdem kann bei einer höheren Anzahl von Aufnahmeeinheiten als Anzeigeeinheiten auch der für ein jeweiliges Sichtfeld erforderliche Bildwinkel durch Zusammensetzen der Information von mehreren der Aufnahmeeinheiten, beispielsweise zwei Aufnahmeeinheiten, erfolgen. Somit ist es möglich, mit verhältnismäßig gering auflösenden Aufnahmeeinheiten dennoch die erforderlichen Auflösungen für die Anzeige zu erzielen.

Vorzugsweise ist die Auflösung der Aufnahmeeinheiten größer als die Auflösung der mindestens einen Anzeigeeinheit und beträgt mindestens 2 MPixel. Je größer die Auflösung der Aufnahmeeinheit ist, die auch deutlich höher als 2 MPixel liegen kann, beispielsweise im Bereich von 6-8 MPixel, desto besser ist die Möglichkeit, die darzustellende Information, d.h. die Sichtfelder, zu optimieren, da mehr Eingangsinformation als auszugebende Information zur Verfügung steht. Vorzugsweise werden bei Verwendung mehrerer Aufnahmeeinheiten unterschiedliche Auflösungen je Aufnahmeeinheit, je nach Bedarf und z. B. Entfernung zum aufzunehmenden Gebiet, verwendet. So ist weiter bevorzugt die Auflösung einer Aufnahmeeinheit für das Sichtfeld eines Hauptspiegels höher als 2 MPixel, während Aufnahmeeinheiten für andere Sichtfelder geringere Auflösungen haben können.

Vorzugsweise weist die Anzeigeeinheit eine von der Bordspannung unabhängige Spannungsversorgung auf. Dies ist insbesondere wichtig, um auch in Fahrzeugzuständen, in denen das Fahrzeug steht und ausgeschaltet ist, d.h. die Zündung aus ist, die Anzeige der Sichtfelder verfügbar zu machen. Insbesondere ist es wichtig, dass ein Fahrzeugführer zumindest nach Bedarf auch dann Information innerhalb der gesetzlich vorgeschriebenen Sichtfelder und ggf. auch innerhalb zusätzlicher Sichtbereiche abrufen kann, wenn das Fahrzeug steht und die Zündung aus ist. Dies erhöht wiederum die Sicherheit und verringert eine Unfallwahrscheinlichkeit.

Um einerseits eine dauerhafte Anzeige der Sichtfelder gewährleisten zu können und gleichzeitig Fehlbedienungen oder ähnliches durch den Benutzer zu minimieren, ist es vorteilhaft, wenn die Anzeigeeinrichtung keine oder kaum zusätzliche Bedienelemente aufweist.

Nachfolgend wird die Erfindung rein beispielhaft anhand der beigefügten Figuren beschrieben, in denen
- Fig. 1: eine schematische Darstellung der Anzeigeeinrichtung zeigt;
- Fig. 2: eine alternative Anordnung der Anzeigeeinrichtung gemäß Fig. 1 zeigt;
- Fig. 3: eine Darstellung auf der Anzeigeeinheit der Anzeigeeinrichtung bei Schnellfahrt zeigt;
- Fig. 4: eine Anzeige gemäß Fig. 3 bei Langsamfahrt zeigt; und
- Fig. 5: eine Anzeige gemäß Figuren 3 und 4 bei Rückwärtsfahrt beispielhaft zeigt.

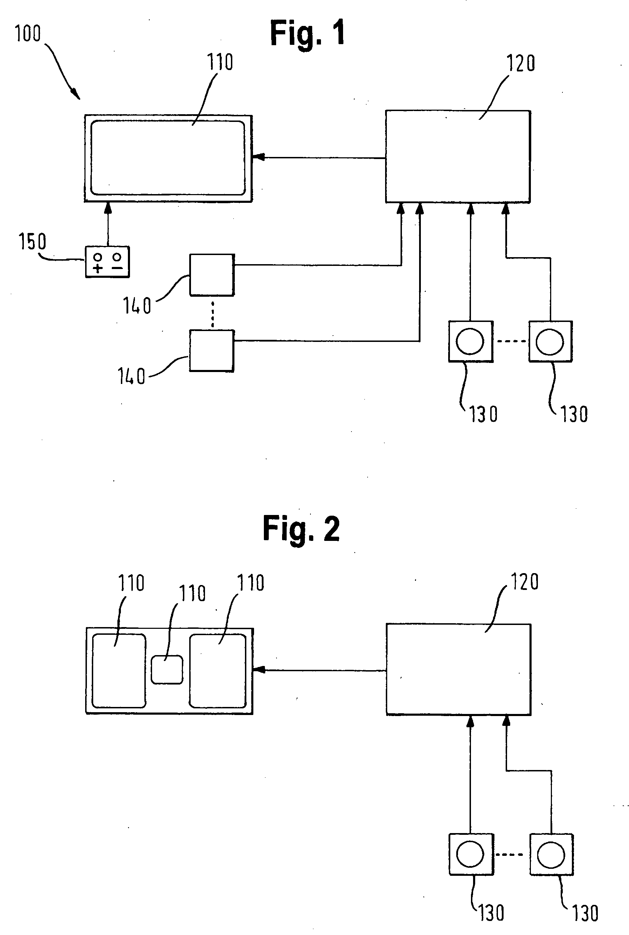

Figuren 1 und 2 zeigen jeweils schematisch eine Einrichtung 100 für gesetzlich vorgeschriebene Sichtfelder eines Nutzfahrzeugs. Die Anzeigeeinrichtung 100 enthält im Fall von Fig. 1 eine einzige Anzeigeeinheit 110, während im Fall von Fig. 2 mehrere Anzeigeeinheiten 110 vorgesehen sind. Diese Anzeigeeinheit(en) 110 ist/sind im Fahrerhaus eines Nutzfahrzeugs angeordnet. Ferner enthält die Anzeigeeinrichtung 100 beispielsweise eine CPU 120 oder eine andere Berechnungseinheit zur Bearbeitung der von Aufnahmeeinheiten 130 erfassten Information und zur Weitergabe dieser bearbeiteten Information in Form der gesetzlich vorgeschriebenen Sichtfelder unter Berücksichtigung der gewählten Darstellung, vorzugsweise in Vogelperspektive, an die Anzeigeeinheit(en) 110. Die Aufnahmeeinheiten 130 können nach Bedarf, d.h. abhängig von der Anzahl und Art der darzustellenden Sichtfelder, in beliebiger Anzahl vorgesehen sein.

Zusätzlich enthält die Anzeigeeinrichtung 100 gemäß Fig. 1 eine Kopplung zu verschiedenen Sensoren 140, beispielsweise einem Sensor für die Erfassung der Fahrtgeschwindigkeit bzw. des Fahrzeugzustands, um auf der Anzeigeeinheit 110 Bildinhalte und Information dynamisch, d.h. abhängig vom Fahrzeugzustand bzw. der Fahrtgeschwindigkeit darstellen zu können. Dazu sind die Sensoren 140 ebenfalls mit der CPU 120 gekoppelt, welche aus der Sensorinformation und der Information von den Aufnahmeeinheiten 130 das darzustellende Bild bestimmt.

Ferner zeigt Fig. 1 für die Anzeigeeinheit 110 eine von der Bordspannung unabhängige Spannungsversorgung 150.

Bei der in Fig. 2 dargestellten Ausführungsform sind keine Sensoren 140 vorgesehen. Somit ist die Darstellung der Inhalte auf der Anzeigeeinheit unabhängig von der Fahrzeuggeschwindigkeit und dem Fahrzeugzustand.

Information, die durch die Aufnahmeeinheiten 130 erfasst wird, wird an die CPU 120 geliefert, ebenso wie ggf. Information von den Sensoren 140. Die CPU 120 verarbeitet diese Information, so dass durch entsprechende Ausgabe an die eine oder mehreren Anzeigeeinheiten 110 auf diesen die gesetzlich vorgeschriebenen Sichtfelder eines Nutzfahrzeugs dargestellt werden können. Dabei werden auf mindestens einer der Anzeigeeinheiten 110 zwei der gesetzlich vorgeschriebenen Sichtfelder in einer gemeinsamen Darstellung gezeigt.

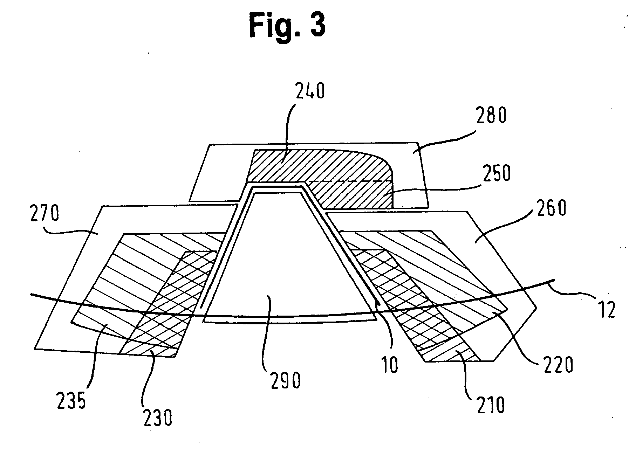

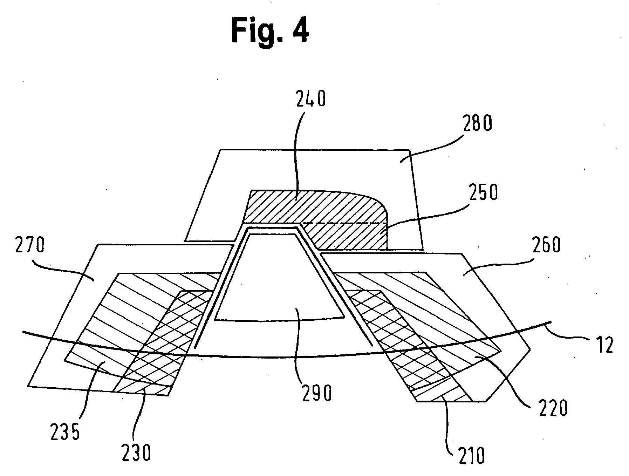

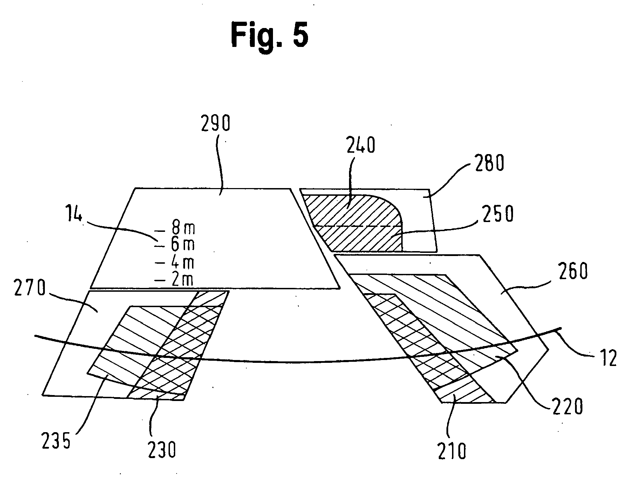

Figuren 3 bis 5 zeigen in verschiedenen Fahrzuständen des Nutzfahrzeugs, die durch beispielsweise die Sensoren 140 erfasst werden, die auf der Anzeigeeinheit 110 aus Fig. 1 dargestellte Information. Dabei zeigt Fig. 3 eine Anzeige bei schneller Fahrt, die beispielsweise über 50 km/h ist, Fig. 4 eine Anzeige bei langsamer Fahrt, z.B. unter 30 km/h bzw. unter 50 km/h und Fig. 5 eine Anzeige bei Rückwärtsfahrt. Die Anzeigen gemäß Fig. 3 bzw. Fig. 4 entsprechen aber auch einer zeitlich und bzgl. des Fahrzeugzustands unveränderlichen Darstellung, wie sie beispielsweise mit einer Anzeigeeinrichtung 100 nach Fig. 1 mit einem Bildschirm erzeugt wird.

In der Darstellung aus Fig. 3 bei schneller Vorwärtsfahrt ist schematisch der Umriss des Nutzfahrzeugs mit 10 bezeichnet. Die hintere Trailerkante 12 des Nutzfahrzeugs ist ebenfalls schematisch in die Darstellung eingeblendet. In der Darstellung aus Fig. 3, die auf der Anzeigeeinheit 110 gemäß Fig. 1 zu sehen ist, ist das Sichtfeld 210 eines rechten Hauptspiegels, das Sichtfeld 220 eines rechten Weitwinkelspiegels, das Sichtfeld 230 eines linken Hauptspiegels, das Sichtfeld 235 eines linken Weitwinkelspiegels, sowie die Sichtfelder 240, 250 eines Frontspiegels und Nahbereichspiegels in einer gemeinsamen Darstellung gezeigt. Dabei sind, wie Fig. 3 entnehmbar ist, das Sichtfeld 210 des rechten Hauptspiegels und das Sichtfeld 220 des rechten Weitwinkelspiegels überlappend in einer gemeinsamen Darstellung und einem gemeinsamen Bereich der Anzeige dargestellt. Diese Sichtfelder sind in der Anzeigeeinheit 110 rechts dargestellt, also entsprechend der Blickrichtung des Fahrers in der Fahrzeugkabine auf derjenigen Seite, deren Information sie darstellen. Das Sichtfeld 230 des linken Hauptspiegels und das Sichtfeld 235 des linken Weitwinkelspiegels ist entsprechend auf der linken Seite in der Darstellung dargestellt. In der dargestellten Ausführungsform ist der linke Hauptspiegel der fahrerseitige Hauptspiegel. Bei Fahrzeugen, die für den Linksverkehr ausgelegt sind, wäre die Anordnung entsprechend achsensymmetrisch zu einer Fahrzeuglängsachse. Die in Fig. 3 bis 5 dargestellten Anordnungen beziehen sich auf eine Ausführungsform für Fahrzeuge für den Rechtsverkehr, bei denen der Fahrzeugführer auf der linken Seite des Fahrerhauses sitzt.

In einem oberen Bereich der Darstellung auf der Anzeigeeinheit 110 sind die Sichtfelder 240, 250 des Fronspiegels und des Nahbereichspiegels oben in der Darstellung, d.h. in der Zeichenebene oberhalb der Sichtfelder für den rechten und linken Haupt bzw. Weitwinkelspiegel gezeigt. Die Sichtfelder 240 und 250 für den Frontspiegel bzw. Nahbereichspiegel sind direkt aneinander angrenzend und ineinander übergehend in der Darstellung dargestellt, so dass der Fahrer den Bereich um das Fahrerhaus als Einheit wahrnimmt und einsehen kann.

Zusätzlich sind auf der Anzeigeeinheit aber auch Sichtbereiche, die über die gesetzlich vorgesehenen Sichtfelder 210, 220, 230, 235, 240 und 250 hinausgehen, dargestellt. Insbesondere ist dies ein zur Seite und nach hinten verlängerter Sichtbereich 260 bzw. 270 auf der linken bzw. rechten Seite des Nutzfahrzeugs sowie ein zur Seite verlängerter Bereich 280 unmittelbar um das Fahrerhaus des Nutzfahrzeugs, d.h. direkt angrenzend an die Sichtfelder 240 und 250 des Frontspiegels und Nahbereichspiegels. Die Sichtbereiche 260 bis 280 sind derart gewählt, dass sie auch eine Verbindung zwischen den Sichtfeldern 210 bis 250 herstellen und in diese übergehen, so dass auf der Anzeigeeinheit 110 die Umgebung des Fahrerhauses sowie des Nutzfahrzeugs im Wesentlichen kontinuierlich dargestellt werden kann.

Alternativ ist es auch möglich, die Sichtbereiche 260, 270 und 280 sowie die innerhalb dieser Sichtbereiche enthaltenen Sichtfelder jeweils auf getrennten Anzeigeeinheiten 110 darzustellen. Ebenso ist es selbstverständlich nicht erforderlich, wie im vorliegenden Fall, alle Spiegel aus dem linken und rechten Hauptspiegel, dem linken und rechten Weitwinkelspiegel und dem Frontspiegel sowie Nahbereichspiegel durch die Anzeigeeinrichtung 100 zu ersetzen. Vielmehr kann auch nur ein Teil dieser Spiegel ersetzt werden und die Anzeige auf der Anzeigeeinheit 110 entsprechend angepasst werden, so dass beispielsweise nur der Sichtbereich 260 der rechten (Beifahrer-) Seite des Nutzfahrzeugs dargestellt wird, das das Sichtfeld 210 des rechten Hauptspiegels und das Sichtfeld 220 des rechten Weitwinkelspiegels enthält, während die anderen Sichtfelder herkömmlich durch Spiegel abgebildet werden.

In der in Fig. 3 dargestellten Anzeige ist darüber hinaus ein Sichtbereich 290 angezeigt, der zwischen dem Sichtbereich 260 für die rechte Seite des Nutzfahrzeugs und dem Sichtbereich 270 für die linke Seite des Nutzfahrzeugs, d.h. mittig, angeordnet ist. Dieser Sichtbereich 290 ist ein Sichtbereich für den Heckbereich des Nutzfahrzeugs und wird beispielsweise als Aufnahmeeinheit 130 durch eine Rückfahrkamera erfasst. Die Darstellung dieses Sichtbereichs 290 ist so, dass die dem Fahrzeug näheren abgebildeten Bereiche weiter unten in der Darstellung liegen und die dem Fahrzeug ferneren Bereiche weiter oben in der Darstellung liegen.

Fig. 4 zeigt eine entsprechende Anordnung wie Fig. 3 für den Langsamfahrzustand des Fahrzeugs. Anders als in Fig. 3 ist hier der Sichtbereich 280 für die Umgebung des Fahrerhauses nach vorne verlängert, so dass der Fahrer einen besseren Überblick über den Bereich vor seinem Nutzfahrzeug bekommt. Gleichzeitig ist der Sichtbereich 290 für den Heckbereich des Fahrzeugs verkleinert dargestellt. Die Positionen der Sichtbereiche und Sichtfelder sind jedoch gegenüber der in Fig. 3 gezeigten Anzeige bei schneller Fahrt unverändert. Somit wird mittels der Anzeigeeinrichtung 100 eine der Fahrsituation angepasste Darstellung der Sichtfelder und Sichtbereiche gewählt, wobei jedoch festzuhalten ist, dass die gesetzlich vorgeschriebenen Sichtfelder 210 bis 250 dauerhaft einsehbar sind.

Sowohl bei der Anzeige gemäß Fig. 3 für schnelle Fahrt als auch bei der Anzeige gemäß Fig. 4 für langsame Fahrt kann zusätzliche Information, wie beispielsweise die Information bezüglich der Trailerkante 12 eingefügt sein. Somit wird es dem Fahrer erleichtert, die Position seines Fahrzeugs innerhalb der Anzeige abzuschätzen.

Fig. 5 zeigt schließlich eine Ausführungsform für die Anzeige bei Rückwärtsfahrt. Hier ist eine andere Anordnung der Sichtbereiche und Sichtfelder gewählt, so dass insbesondere der Sichtbereich 290 für den Heckbereich des Nutzfahrzeugs vergrößert und zentral auf der Anzeigeeinheit 110 dargestellt wird, in der dargestellten Ausführungsform links oben bis mittig in der Abbildung. Dafür ist das Sichtfeld 240 des Frontspiegels verkleinert dargestellt bzw. abgeschnitten, während die anderen Sichtfelder 210 bzw. 230 des rechten und linken Hauptspiegels zwar an gleicher Position, aber ggf. ebenfalls verkleinert dargestellt sind, ebenso wie die Sichtfelder 220, 235 des (beifahrerseitigen) rechten und (fahrseitigen) linken Weitwinkelspiegels. Zusätzliche Information bezüglich der Trailerkante 12 in Bezug auf das Sichtfeld 210 bzw. 230 des rechten bzw. des linken Hauptspiegels ist eingeblendet, ebenso wie Abstandsinformation 14 im Sichtbereich 290 bezüglich des Abstands zum Nutzfahrzeug.

Der wesentliche Aspekt der Erfindung liegt darin, dass die gesetzlich vorgeschriebenen Sichtfelder eines Nutzfahrzeugs, die nicht in herkömmlicher Weise durch Spiegel abgebildet werden, mittels der Anzeigeeinrichtung dargestellt sind, wobei mindestens zwei gesetzlich vorgeschriebene Sichtfelder in einer gemeinsamen Darstellung abgebildet sind. Damit kann nicht nur die Fahrsicherheit durch eine ergonomischere und umfassendere Anzeige des Umfelds des Nutzfahrzeugs verbessert werden, sondern es kann auch durch Weglassen von großflächigen und aufwendigen Spiegeln die Umströmung des Nutzfahrzeugs bei Fahrt verbessert werden, was somit zu einem verringerten Kraftstoffverbrauch und damit höherer Wirtschaftlichkeit führt.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 10: Umriss Nutzfahrzeug
- 12: Trailerkante
- 14: Abstandsinformation
- 100: Anzeigeeinrichtung
- 110: Anzeigeeinheit
- 120: CPU
- 130: Aufnahmeeinheit
- 140: Sensor
- 150: Spannungsversorgung
- 210: Sichtfeld rechter Hauptspiegel
- 220: Sichtfeld rechter Weitwinkelspiegel
- 230: Sichtfeld linker Hauptspiegel
- 235: Sichtfeld linker Weitwinkelspiegel
- 240: Sichtfeld Frontspiegel
- 250: Sichtfeld Nahbereichsspiegel
- 260: Sichtbereich rechte Seite Nutzfahrzeug
- 270: Sichtbereich linke Seite Nutzfahrzeug
- 280: Sichtbereich Umgebung Fahrerhaus
- 290: Sichtbereich Heckbereich

## Patentansprüche

1. Anzeigeeinrichtung (100) für gesetzlich vorgeschriebene Sichtfelder (210, 220, 230, 235, 240, 250) eines Nutzfahrzeugs in einem Fahrerhaus des Nutzfahrzeugs, enthaltend mindestens eine Aufnahmeeinheit (130), eine Berechnungseinheit (120) und mindestens eine Anzeigeeinheit (110), wobei die Anzeigeeinrichtung (100) dazu angepasst ist, die von der mindestens einen Aufnahmeeinheit (130) erfasste Information derart mittels der Berechnungseinheit (120) zu bearbeiten und an die mindestens eine Anzeigeeinheit (110) weiterzugeben, dass mindestens zwei der im Fahrbetrieb zur permanenten Anzeige gesetzlich vorgeschriebenen Sichtfelder (210, 220, 230, 235, 240, 250) dauerhaft, zeitlich ununterbrochen, jederzeit von einem Fahrer des Nutzfahrzeugs einsehbar und in Echtzeit auf der Anzeigeeinheit (110) im Fahrerhaus angezeigt werden, wobei die mindestens zwei Sichtfelder (210, 220, 230, 235, 240, 250) in einer gemeinsamen Darstellung gezeigt werden,
wobei die gesetzlich vorgeschriebenen Sichtfelder (210, 220, 230, 235, 240, 250) das Sichtfeld (210, 230) eines Hauptspiegels und das Sichtfeld (220, 235) eines Weitwinkelspiegels beinhalten, die in der gemeinsamen Darstellung angezeigt werden **dadurch gekennzeichnet dass** die mindestens zwei Sichtfelder (210, 220, 230, 235, 240, 250) in der gemeinsamen Darstellung auch in Fahrzuständen angezeigt werden, in denen das Nutzfahrzeug steht und die Zündung des Nutzfahrzeugs ausgeschaltet ist.

2. Anzeigeeinrichtung (100) nach Anspruch 1, wobei die Sichtfelder (210, 220, 230, 235, 240, 250) benachbart sind und die Sichtfelder (210, 220, 230, 235, 240, 250) unmittelbar aneinander angrenzend oder überlappend angezeigt werden.

3. Anzeigeeinrichtung (100) nach einem der vorhergehenden Ansprüche, wobei die Sichtfelder (210, 220, 230, 235, 240, 250) das Sichtfeld (230) eines linken Hauptspiegels und/oder das Sichtfeld (235) eines linken Weitwinkelspiegels und das Sichtfeld (210) eines rechten Hauptspiegels und/oder das Sichtfeld (220) eines rechten Weitwinkelspiegels enthalten, wobei vorzugsweise
die Anzeigeeinrichtung (100) angepasst ist, das Sichtfeld (230) des linken Hauptspiegels und/oder das Sichtfeld (235) des linken Weitwinkelspiegels links auf der Anzeigeeinheit darzustellen, und/oder
die Anzeigeeinrichtung (100) angepasst ist, das Sichtfeld (210) des rechten Hauptspiegels und/oder das Sichtfeld (220) des rechten Weitwinkelspiegels rechts auf der Anzeigeeinheit darzustellen.

4. Anzeigeeinrichtung (100) nach einem der vorhergehenden Ansprüche, wobei die Sichtfelder (210, 220, 230, 235, 240, 250) das Sichtfeld (250) eines Nahbereichsspiegels und/oder das Sichtfeld (240) eines Frontspiegels enthalten, wobei vorzugsweise die Anzeigeeinrichtung (100) angepasst ist, das Sichtfeld (250) des Nahbereichsspiegels und/oder das Sichtfeld (240) des Frontspiegels bezüglich der links-rechts Richtung mittig auf der Anzeigeeinheit (110) darzustellen.

5. Anzeigeeinrichtung (100) nach einem der vorhergehenden Ansprüche, wobei die Anzeigeeinrichtung (100) angepasst ist, die Sichtfelder (210, 220, 230, 235, 240, 250) in Vogelperspektive anzuzeigen.

6. Anzeigeeinrichtung (100) nach einem der vorhergehenden Ansprüche, wobei die Anzeigeeinrichtung (100) angepasst ist, die Sichtfelder (210, 220, 230, 235, 240, 250) dauerhaft an gleicher Position und mit gleicher Größe auf der Anzeigeeinheit (110) darzustellen, oder
wobei die Anzeigeeinrichtung (100) angepasst ist, die Sichtfelder (210, 220, 230, 235, 240, 250) an sich verändernder Position und/oder mit sich verändernder Größe auf der Anzeigeeinheit (110) dauerhaft darzustellen.

7. Anzeigeeinrichtung (100) nach einem der vorhergehenden Ansprüche, wobei die Anzeigeeinrichtung (100) angepasst ist, zusätzliche Sichtbereiche (260, 270, 280, 290) auf der Anzeigeeinheit darzustellen, wobei die Sichtbereiche (260, 270, 280, 290) Information aus dem Frontbereich des Nutzfahrzeugs und/oder dem Heckbereich des Nutzfahrzeugs enthalten.

8. Anzeigeeinrichtung (100) nach Anspruch 7, wobei die Sichtbereiche (260, 270, 280, 290) Information aus dem Heckbereich des Nutzfahrzeugs enthalten und die Anzeigeeinrichtung (100) angepasst ist, die Sichtbereiche (260, 270, 280, 290) überlappend und/oder angrenzend an das Sichtfeld (210, 230) eines Hauptspiegels und/oder das Sichtfeld (220, 235) eines Weitwinkelspiegels darzustellen, und/oder wobei die Anzeigeeinrichtung (110) angepasst ist, die zusätzlichen Sichtbereiche (260, 270, 280, 290) bedarfsweise und/oder veränderlich hinsichtlich der Position auf der Anzeigeeinheit (110) darzustellen, vorzugsweise
in Abhängigkeit von der Fahrzeuggeschwindigkeit und/oder Fahrzeugfahrtrichtung.

9. Anzeigeeinrichtung (100) nach einem der vorhergehenden Ansprüche, wobei die Anzeigeeinrichtung (100) angepasst ist, überlagernd mit zumindest einem der Sichtfelder (210, 220, 230, 235, 240, 250) oder Sichtbereiche (260, 270, 280, 290) Positionsinformation (12) in Bezug auf das Nutzfahrzeug anzuzeigen.

10. Anzeigeeinrichtung (100) nach einem der vorhergehenden Ansprüche, wobei die Anzeigeeinrichtung (100) eine einzige Anzeigeeinheit (110) für alle dargestellten Sichtfelder enthält, oder
wobei die Anzeigeeinrichtung (100) zwei, drei oder vier voneinander getrennte Anzeigeeinheiten (110) enthält und vorzugsweise angepasst ist, von den darzustellenden Sichtfeldern nur das Sichtfeld (230) eines linken Hauptspiegels und/oder das Sichtfeld (235) eines linken Weitwinkelspiegels auf einer der Anzeigeeinheiten (110) darzustellen, und/oder vorzugsweise angepasst ist, von den darzustellenden Sichtfeldern nur das Sichtfeld (210) eines rechten Hauptspiegels und/oder das Sichtfeld (220) eines rechten Weitwinkelspiegels auf einer der Anzeigeeinheiten darzustellen, und/oder vorzugsweise angepasst ist, von den darzustellenden Sichtfeldern nur das Sichtfeld (250) eines Nahbereichsspiegels und/oder das Sichtfeld (240) eines Frontspiegels auf einer der Anzeigeeinheiten (110) darzustellen.

11. Anzeigeeinrichtung (100) nach einem der vorhergehenden Ansprüche, wobei die mindestens eine Aufnahmeeinheit (130) Sichtfeldinformation aufnimmt, wobei vorzugsweise mehrere Aufnahmeeinheiten (130) vorgesehen sind und die Anzahl der Aufnahmeeinheiten größer als die Anzahl der Anzeigeeinheiten (110) ist, und/oder vorzugsweise
die Auflösung der mindestens einen Aufnahmeeinheit (130) größer als die Auflösung der mindestens einen Anzeigeeinheit (110) ist, und/oder vorzugsweise die Auflösung mindestens einer der Aufnahmeeinheiten (130) mindestens 2MPixel beträgt, vorzugsweise die Auflösung einer Aufnahmeeinheit (130) für das Sichtfeld (210, 230) eines Hauptspiegels.

12. Anzeigeeinrichtung (100) nach Anspruch 11, wobei die Anzeigeeinrichtung (100) mindestens zwei Aufnahmeeinheiten (130) enthält und die Anzeigeeinrichtung (100) angepasst ist, die Sichtfeldinformation für ein darzustellendes Sichtfeld (210, 220, 230, 235, 240, 250) aus den Sichtfeldinformationen der mindestens zwei Aufnahmeeinheiten (130) zu kombinieren, oder
wobei die Anzeigeeinrichtung (100) mindestens zwei Aufnahmeeinheiten (130) enthält, die angepasst sind, redundant Sichtfeldinformation für ein darzustellendes Sichtfeld (210, 220, 230, 235, 240, 250) zu erfassen.

13. Anzeigeeinrichtung (100) nach Anspruch 11, wobei eine einzige Aufnahmeeinheit (130) zur Aufnahme von Sichtfeldinformationen des Sichtfelds (210, 230) eines Hauptspiegels und des Sichtfelds (220, 235) eines Weitwinkelspiegels der gleichen Fahrzeugseite vorgesehen ist und die Sichtfelder (210, 220 , 230, 235) auf einer gemeinsamen Anzeigeeinheit (110) in getrennten Bereichen im Split-Screen Verfahren gezeigt werden.

14. Anzeigeeinrichtung (100) nach einem der Ansprüche 11 oder 12, wobei eine erste Aufnahmeeinheit (130) mit einer ersten Auflösung zur Aufnahme eines ersten Bildwinkels und eine zweite Aufnahmeeinheit mit einer zweiten Auflösung zur Aufnahme eines zweiten, vom ersten Bildwinkel verschiedenen Bildwinkels vorgesehen sind, und wobei die erste Auflösung größer als die zweite Auflösung ist, und wobei die beiden mit den Aufnahmeeinheiten aufgenommenen Sichtbereiche in einer gemeinsamen Anzeigeeinheit (110) gezeigt werden und nicht wesentlich überlappen, wobei wenigstens die Vereinigungsmenge des Sichtfelds (210, 230) eines Hauptspiegels und des Sichtfelds (230, 235) eines Weitwinkelspiegels der gleichen Fahrzeugseite gezeigt wird, wobei vorzugsweise der erste Bildwinkel kleiner als der zweite Bildwinkel ist.

15. Anzeigeeinrichtung (100) nach Anspruch 11, wobei eine gemeinsame Aufnahmeeinheit (130) für das Sichtfeld (210, 230) eines Hauptspiegels und das Sichtfeld (220, 235) eines Weitwinkelspiegels der gleichen Fahrzeugseite vorgesehen ist, die einen vorzugsweise hochauflösenden Sensor und ein panamorphes Objektiv enthält, wobei die Sichtfelder (210, 220, 230, 235) mittels einer gemeinsamen Anzeigeeinheit (110) gezeigt werden.

## Claims

1. A display device (100) for displaying legally prescribed fields of view (210, 220, 230, 235, 240, 250) of a commercial vehicle within a driver's cabin of the commercial vehicle, the display device comprising at least one capturing unit (130), a calculation unit (120), and at least one display unit (110), wherein the display device (100) is adapted to process information acquired by the at least one capturing unit (130) by means of the calculation unit (12) and to transmit said information to the at least one display unit (110) such that at least two of the legally prescribed fields of view (210, 220, 230, 235, 240, 250), which have to be permanently displayed during driving operation, are displayed on the display unit (110) in the driver's cabin permanently, continuously, visibly for the driver at any time, and in real time, wherein the at least two fields of view (210, 220, 230, 235, 240, 250) are shown in a common depiction, wherein
the legally prescribed fields of view (210, 220, 230, 235, 240, 250) include the field of view (210, 230) of a main mirror and the field of view (220, 235) of a wide-angle mirror, which fields of view are shown in the common representation, **characterized in that** the at least two fields of view (210, 220, 230, 235, 240, 250) are displayed in the common depiction also in driving situations in which the commercial vehicle is stationary and the ignition of the commercial vehicle is switched off.

2. The display device (100) according to claim 1, wherein the fields of view (210, 220, 230, 235, 240, 250) are adjacent to one another, and wherein the fields of view (210, 220, 230, 235, 240, 250) are displayed immediately adjacent to one another or in an overlapping manner.

3. The display device (100) according to any one of the preceding claims, wherein the fields of view (210, 220, 230, 235, 240, 250) include the field of view (230) of a left main mirror and/or the field of view (235) of a left wide-angle mirror and the field of view (210) of a right main mirror and/or the field of view (220) of a right wide-angle mirror, wherein preferably
the display device (100) is adapted to display the field of view (230) of the left main mirror and/or the field of view (235) of the left wide-angle mirror on the left side of the display unit, and/or
the display device (100) is adapted to display the field of view (210) of the right main mirror and/or the field of view (220) of the right wide-angle mirror on the right side of the display unit.

4. The display device (100) according to any one of the preceding claims, wherein the fields of view (210, 220, 230, 235, 240, 250) include the field of view (250) of a close-proximity mirror and/or the field of view (240) of a front mirror, wherein preferably the display device (100) is adapted to display the field of view (250) of the close-proximity mirror and/or the field of view (240) of the front mirror in the center of the display unit (110) with regard to the left-right direction.

5. The display device (100) according to any one of the preceding claims, wherein the display device (100) is adapted to display the fields of view (210, 220, 230, 235, 240, 250) from a bird's-eye view.

6. The display device (100) according to any one of the preceding claims, wherein the display device (100) is adapted to permanently display the fields of view (210, 220, 230, 235, 240, 250) on the display unit (110) at the same position and with the same size, or wherein the display device (100) is adapted to permanently display the fields of view (210, 220, 230, 235, 240, 250) on the display unit (110) at changing positions and/or with changing size.

7. The display device (100) according to any one of the preceding claims, wherein the display device (100) is adapted to display additional viewing areas (260, 270, 280, 290) on the display unit, and wherein the viewing areas (260, 270, 280, 290) include information on the front part and/or the rear part of the commercial vehicle.

8. The display device (100) according to claim 7, wherein the viewing areas (260, 270, 280, 290) include information on the rear part of the commercial vehicle and the display device (100) is adapted to display the viewing areas (260, 270, 280, 290) in an overlapping manner and/or adjacent to the field of view (210, 230) of a main mirror and/or the field of vison (220, 235) of a wide-angle mirror, and/or
wherein the display device (100) is adapted to display the additional viewing areas (260, 270, 280, 290) on demand and/or variable with regard to their position on the display unit (110), preferably
dependent on the vehicle speed and/or the driving direction.

9. The display device (100) according to any one of the preceding claims, wherein the display device (100) is adapted to display, superimposed with at least one of the fields of view (210, 220, 230, 235, 240, 250) or viewing areas (260, 270, 280, 290), position information (12) regarding the commercial vehicle.

10. The display device (100) according to any one of the preceding claims, wherein the display device (100) includes a single display unit (110) for all depicted fields of view, or wherein the display device (100) includes two, three, or four separate display units (110) and preferably
is adapted to display, from the fields of view to be depicted, only the field of view (230) of a left main mirror and/or the field of view (235) of a left wide-angle mirror on one of the display units (110), and/or preferably
is adapted to display, from the fields of view to be depicted, only the field of view (210) of a right main mirror and/or the field of view (220) of a right wide-angle mirror on one of the display units, and/or preferably
is adapted to display, from the fields of view to be depicted, only the field of view (250) of a close-proximity mirror and/or the field of view (240) of a front mirror on one of the display units (110).

11. The display device (100) according to any one of the preceding claims, wherein the at least one capturing unit (130) captures information on the fields of view,
wherein preferably a plurality of capturing units (130) are provided, and the number of capturing units is larger than the number of display units (110), and/or
preferably
the resolution of the at least one capturing unit (130) is higher than the resolution of the at least one display unit (110), and/or preferably
the resolution of at least one of the capturing units (130) is at least 2 megapixel, preferably the resolution of a capturing unit (130) for the field of view (210, 230) of a main mirror.

12. The display device (100) according to claim 11, wherein the display device (100) includes at least two capturing units (130) and is adapted to combine the information on the field of view for a field of view (210, 220, 230, 235, 240, 250) to be displayed of the information on the fields of view of the at least two capturing units (130), or
wherein the display device (100) includes at least two capturing units (130) which are adapted to redundantly acquire information on a field of view (210, 220, 230, 235, 240, 250) to be displayed.

13. The display device (100) according to claim 11, wherein a single capturing unit (130) is provided for capturing information on the field of view (210, 230) of a main mirror and the field of view (220, 235) of a wide-angle mirror on the same vehicle side, and wherein the fields of view (210, 220, 230, 235) are shown in separate areas of a common display unit (110), by means of split-screen.

14. The display device (100) according to any one of claims 11 or 12, wherein a first capturing unit (130) with a first resolution for capturing a first angle of view, and a second capturing unit with a second resolution for capturing a second angle of view, which differs from the first angle of view, are provided, the first resolution being larger than the second resolution, and wherein the two viewing areas captured by the capturing units are shown on a common display unit (110) and do not substantially overlap, wherein at least the union of the field of view (210, 230) of a main mirror and the field of view (230, 235) of a wide-angle mirror on the same vehicle side is shown, the first angle of view being preferably smaller than the second angle of view.

15. The display device (100) according to claim 11, wherein a common capturing unit (130) for the field of view (210, 230) of a main mirror and the field of view (220, 235) of a wide-angle mirror on the same vehicle side is provided, the common capturing unit preferably including a high-resolution sensor and a panomorph lens, and wherein the fields of view (210, 220, 230, 235) are displayed on a common display unit (110).

## Revendications

1. Dispositif d'affichage (100) pour des champs de vision (210, 220, 230, 235, 240, 250) prescrits par la loi d'un véhicule utilitaire dans une cabine de conducteur du véhicule utilitaire, contenant au moins une unité de réception (130), une unité de calcul (120) et au moins une unité d'affichage (110), où le dispositif d'affichage (100) est adapté pour traiter l'information détectée par l'au moins une unité de réception (130) au moyen de l'unité de calcul (120) et pour la transmettre à l'au moins une unité d'affichage (110) de telle manière qu'au moins deux des champs de vision (210, 220, 230, 235, 240, 250) prescrits par la loi lors de la conduite servant à l'affichage permanent peuvent être vus de manière durable, sans interruption dans le temps, à tout moment par un conducteur du véhicule utilitaire et sont affichés dans la cabine de conducteur en temps réel sur l'unité d'affichage (110), où les au moins deux champs de vision (210, 220, 230, 235, 240, 250) sont affichés dans une représentation commune, où
les champs de vision (210, 220, 230, 235, 240, 250) prescrits par la loi incluent le champ de vision (210, 230) du rétroviseur principal et le champ de vision (220, 235) d'un rétroviseur grand angle, lesquels sont affichés dans la représentation commune, **caractérisé en ce que** les au moins deux champs de vision (210, 220, 230, 235, 240, 250) sont affichés dans la représentation commune aussi sur états de conduite où le véhicule utilitaire est à l'arrêt et le contact est coupé.

2. Dispositif d'affichage (100) selon la revendication 1, où les champs de vision (210, 220, 230, 235, 240, 250) sont adjacents et les champs de vision (210, 220, 230, 235, 240, 250) sont affichés directement de manière à s'avoisiner les uns les autres ou de manière à se chevaucher.

3. Dispositif d'affichage (100) selon l'une quelconque des revendications précédentes, où les champs de vision (210, 220, 230, 235, 240, 250) contiennent le champ de vision (230) d'un rétroviseur principal gauche et/ou le champ de vision (235) d'un rétroviseur grand angle gauche et le champ de vision (210) d'un rétroviseur principal droit et/ou le champ de vision (220) d'un rétroviseur grand angle droit, où de préférence
le dispositif d'affichage (100) est adapté pour représenter le champ de vision (230) du rétroviseur principal gauche et/ou le champ de vision (235) du rétroviseur grand angle gauche à gauche sur l'unité d'affichage, et/ou
le dispositif d'affichage (100) est adapté pour représenter le champ de vision (210) du rétroviseur principal droit et/ou le champ de vision (220) du rétroviseur grand angle droit à droite sur l'unité d'affichage.

4. Dispositif d'affichage (100) selon l'une quelconque des revendications précédentes, où les champs de vision (210, 220, 230, 235, 240, 250) contiennent le champ de vision (250) d'un rétroviseur de proximité immédiate et/ou le champ de vision (240) d'un rétroviseur avant, où de préférence le dispositif d'affichage (100) est adapté pour représenter le champ de vision (250) du rétroviseur de proximité immédiate et/ou le champ de vision (240) du rétroviseur avant par rapport au sens gauche-droite au centre sur l'unité d'affichage (110).

5. Dispositif d'affichage (100) selon l'une quelconque des revendications précédentes, où le dispositif d'affichage (100) est adapté pour afficher les champs de vision (210, 220, 230, 235, 240, 250) à vol d'oiseau.

6. Dispositif d'affichage (100) selon l'une quelconque des revendications précédentes, où le dispositif d'affichage (100) est adapté pour représenter les champs de vision (210, 220, 230, 235, 240, 250) de manière durable en une même position et avec une même dimension sur l'unité d'affichage (110), ou bien où le dispositif d'affichage (100) est adapté pour représenter les champs de vision (210, 220, 230, 235, 240, 250) de manière durable en une position variable et/ou avec une dimension variable sur l'unité d'affichage (110).

7. Dispositif d'affichage (100) selon l'une quelconque des revendications précédentes, où le dispositif d'affichage (100) est adapté pour représenter des zones de vison (260, 270, 280, 290) supplémentaires sur l'unité d'affichage, où les zones de vision (260, 270, 280, 290) contiennent une information issue de la zone avant du véhicule utilitaire et/ou de la zone arrière du véhicule utilitaire.

8. Dispositif d'affichage (100) selon la revendication 7, où les zones de vision (260, 270, 280, 290) contiennent une information issue de la zone arrière du véhicule utilitaire et le dispositif d'affichage (100) est adapté pour représenter les zones de vision (260, 270, 280, 290) de manière à chevaucher et/ou à avoisiner le champ de vision (210, 230) d'un rétroviseur principal et/ou le champ de vision (220, 235) d'un rétroviseur à grand angle, et/ou
où le dispositif d'affichage (110) est adapté pour représenter les zones de vision (260, 270, 280, 290) supplémentaires si besoin et/ou de manière variable eu égard à la position sur l'unité d'affichage (110), de préférence
en fonction de la vitesse de véhicule et/ou du sens de déplacement de véhicule.

9. Dispositif d'affichage (100) selon l'une quelconque des revendications précédentes, où le dispositif d'affichage (100) est adapté pour afficher une information de position (12) concernant le véhicule utilitaire en superposition avec au moins un des champs de vision (210, 220, 230, 235, 240, 250) ou une des zones de vision (260, 270, 280, 290).

10. Dispositif d'affichage (100) selon l'une quelconque des revendications précédentes, où le dispositif d'affichage (100) contient une unique unité d'affichage (110) pour tous les champs de vision représentés, ou
où le dispositif d'affichage (100) contient deux, trois ou quatre unités d'affichage (110) séparées les unes des autres, et de préférence
est adapté pour représenter parmi les champs de vision à représenter uniquement le champ de vision (230) d'un rétroviseur principal gauche et/ou le champ de vision (235) d'un rétroviseur grand angle gauche sur l'une des unités d'affichage (110), et/ou de préférence
est adapté pour représenter parmi les champs de vision à représenter uniquement le champ de vision (210) d'un rétroviseur principal droit et/ou le champ de vision (220) d'un rétroviseur grand angle droit sur l'une des unités d'affichage, et/ou de préférence
est adapté pour représenter parmi les champs de vision à représenter uniquement le champ de vision (250) d'un rétroviseur de proximité immédiate et/ou le champ de vision (240) d'un rétroviseur avant sur l'une des unités d'affichage (110).

11. Dispositif d'affichage (100) selon l'une quelconque des revendications précédentes, où l'au moins une unité de réception (130) reçoit une information de champ de vision,
où de préférence plusieurs unités de réception (130) sont prévues et le nombre des unités de réception est plus grand que le nombre des unités d'affichage (110), et/ou de préférence
la résolution de l'au moins une unité de réception (130) est plus grande que la résolution de l'au moins une unité d'affichage (110), et/ou de préférence la résolution d'au moins une des unités de réception (130) est égale à au moins 2 MP, de préférence la résolution d'une unité de réception (130) pour le champ de vision (210, 230) d'un rétroviseur principal.

12. Dispositif d'affichage (100) selon la revendication 11, où le dispositif d'affichage (100) contient au moins deux unités de réception (130) et le dispositif d'affichage (100) est adapté pour combiner l'information de champ de vision pour un champ de vision (210, 220, 230, 235, 240, 250) à représenter à partir des informations de champ de vision des au moins deux unités de réception (130), ou bien où le dispositif d'affichage (100) contient au moins deux unités de réception (130), qui sont adaptées pour détecter avec redondance une information de champ de vision pour un champ de vision (210, 220, 230, 235, 240, 250) à représenter.

13. Dispositif d'affichage (100) selon la revendication 11, où une unique unité de réception (130) est prévue pour recevoir des informations de champ de vision du champ de vision (210, 230) d'un rétroviseur principal et du champ de vision (220, 235) d'un rétroviseur grand angle du même côté de véhicule et les champs de vision (210, 220, 230, 235) sont montrés sur une unité d'affichage (110) commune dans des zones séparées selon la méthode du split screen (écran partagé).

14. Dispositif d'affichage (100) selon l'une quelconque des revendications 11 ou 12, où sont prévues une première unité de réception (130) présentant une première résolution servant à recevoir un premier angle d'image et une deuxième unité de réception présentant une deuxième résolution servant à recevoir un deuxième angle d'image différent du premier angle d'image, et où la première résolution est plus grande que la deuxième résolution, et où les deux zones de vision reçues à l'aide des unités de réception sont montrées dans une unité d'affichage (110) commune et ne se chevauchent pas essentiellement, où au moins la quantité combinée du champ de vision (210, 230) d'un rétroviseur principal et du champ de vision (230, 235) d'un rétroviseur grand angle du même côté de véhicule est montrée, où de préférence le premier angle d'image est inférieur au deuxième angle d'image.

15. Dispositif d'affichage (100) selon la revendication 11, où une unité de réception (130) commune pour le champ de vision (210, 230) d'un rétroviseur principal et pour le champ de vision (220, 235) d'un rétroviseur grand angle du même côté de véhicule est prévue, laquelle contient un capteur de préférence à haute résolution et un objectif panomorphe, où les champs de vision (210, 220, 230, 235) sont montrés au moyen d'une unité d'affichage (110) commune.
